# EUROPÄISCHE PATENTSCHRIFT

(11) **EP 2 484 154 B1**
(45) Veröffentlichungstag und Bekanntmachung des Hinweises auf die Patenterteilung: **03.01.2018**
(21) Anmeldenummer: 10779270.7
(22) Anmeldetag: 03.11.2010
(51) Int. Cl.: H04W 48/12, H04W 52/02

(54) **VERFAHRREN ZU ÜBERTRAGUNG EINES BEACONS IN EINEM STERNNETZ (MASTER-SLAVE ADHOC NETWORK) UND EIN SENSORKNOTEN IN EINEM STERNNETZ**
METHOD FOR TRANSMITTING A BEACON IN A STAR NETWORK (MASTER-SLAVE AD HOC NETWORK) AND A SENSOR NODE IN A STAR NETWORK
PROCÉDÉ DE TRANSMISSION D'UNE BALISE DANS UN RÉSEAU EN ÉTOILE (RÉSEAU MAÎTRE-ESCLAVE AD HOC), AINSI QU'UN DÉTECTEUR DANS UN RÉSEAU EN ÉTOILE

(30) Priorität: 10.11.2009 DE 102009052573
(43) Veröffentlichungstag der Anmeldung: 08.08.2012
(73) Patentinhaber: Siemens Aktiengesellschaft, 80333 München (DE)
(72) Erfinder: BAHR, Michael, 81827 München (DE); HUSAK, Jan, 19600 Prag 9 CZ (CZ); LAHNER, Frank, 91052 Erlangen (DE); VICARI, Norbert, 81827 München (DE)
(86) Internationale Anmeldenummer: PCT/EP2010/066757
(87) Internationale Veröffentlichungsnummer: WO 2011/057932

(56) Entgegenhaltungen:
- US-A1- 2007 174 465
- US-A1- 2009 238 160
- ZAFER SAHINOGLU (MITSUBISHI ELECTRIC RESEARCH LABS): "Draft specification for IEEE 802.15.4e Factory Automation 15-09/401r3", IEEE P802.15 WORKING GROUP FOR WIRELESS PERSONAL AREA NETWORKS (WPANS), [Online] 14. August 2009 (2009-08-14), Seiten 1-56, XP002616217, Gefunden im Internet: URL:https://mentor.ieee.org/802.15/dcn/09/ 15-09-0401-03-004e-draft-text-for-factory- automation.doc> [gefunden am 2011-01-11] in der Anmeldung erwähnt
- YANG YANG, HEQING HUANG, HAITAO LIU, LIANG LI, JIE SHEN][SIMIT/VINNO/HUAWEI: "Different Frame Formats Analyses in Current 15.4E std Draft", IEEE P802.15 WORKING GROUP FOR WIRELESS PERSONAL AREA NETWORKS (WPANS), [Online] 15. Januar 2010 (2010-01-15), Seiten 1-27, XP002616189, [No.865 Changning Road, Shanghai, 200050, China Gefunden im Internet: URL:https://mentor.ieee.org/802.15/dcn/10/ 15-10-0024-00-004e-different-frame-formats -analyses-in-current-15-4e-std-draft.ppt> [gefunden am 2011-01-11]

## Beschreibung

Die Erfindung betrifft ein Beacon für ein Sternnetz, einen Sensorknoten in einem Sternnetz und ein Verfahren zum Betrieb eines Sternnetzes.

In der Fertigungsautomatisierung sind hohe Vorgaben an eine Latenzzeit zwischen Kommunikationspartnern von drahtlosen Netzen vorgesehen. Unter dieser Latenzzeit wird ein Zeitraum zwischen dem Absenden einer beliebigen Nachricht an einen Kommunikationspartner und dem Eintreffen der Nachricht beim Kommunikationspartner verstanden. Diese Latenzzeit soll aufgrund der besonderen Bedürfnisse in der Fertigung möglichst klein gehalten sein.

Aus dem Stand der Technik ist eine Architektur für ein drahtloses Netz zum Einsatz in der Fertigungsautomatisierung mit einem sternförmigen Netz bekannt, bei dem ein Zeitschlitzverfahren TDMA (Time Division Multiple Access) zum Einsatz kommt, vgl. Sahinoglu, Z. et al.: »TG4e drafting - Draft specification for IEEE 802.15.4e Factory Automation«, IEEE 802.15.4 document 15-09/401r3, Juli 2009. Auf die vorbezeichnete Veröffentlichung wird im Folgenden als Dokument [1] Bezug genommen.

Das sternförmige Netz besteht aus mindestens einem zentralen Knoten - im Folgenden auch Gateway genannt - sowie mehreren sternförmig mit diesem verbundenen Netzknoten. Da in der Fertigungsautomatisierung üblicherweise »intelligente« Sensoren zum Einsatz kommen, werden die Netzknoten im Folgenden auch als »Sensorknoten« bezeichnet. Unter intelligenten Sensoren werden dabei Einrichtungen verstanden, die neben Ihrer sensorischen Funktion auch Funktionalitäten aufweisen, welche eine Einbindung in ein Netzwerk, eine bidirektionale Kommunikation mit anderen Netzwerkeinrichtungen, sowie eine Verarbeitung der Sensordaten gewährleisten.

Ein drahtloses Netz ist in der Fertigungsautomatisierung oftmals das Mittel der Wahl, da eine Festverdrahtung der Sensoren zu zeitaufwendig und kostenintensiv wäre. Darüber hinaus bedeutet eine Verdrahtung eine eingeschränkte Bewegungsfreiheit sowie eine regelmäßige Quelle von Fehlern, welche nicht zuletzt auf eine im industriellen Umfeld gegebene raue Umgebung zurückzuführen ist und welche eine Ursache weiterer Kosten durch einen Produktionsausfall bedeuten kann. Ein drahtloser Zugang zu Sensoren und auch Aktoren vermeidet dabei die oben genannten Probleme und bietet zusätzlich den Vorteil, im Fall von Prozessänderungen oder Umbau von Prozessgeräten eine erhöhte Flexibilität zu gewährleisten.

Der Einsatz der Lehre von Dokument [1] in Verbindung mit den Vorgaben des Standards IEEE 802.15.4 gewährleistet ein zuverlässiges Verfahren für eine drahtlose und energiesparende Übertragung von Sensordaten.

Zur Kommunikation der Sensorknoten und des Gateways ist ein Protokoll unter Verwendung eines Superframes definiert. Ein Superframe definiert eine Zuteilung von jeweiligen Zeitschlitzen auf die einzelnen Sensorknoten. Für jeden jeweiligen Sensorknoten ist dabei mindestens ein dedizierter Zeitschlitz zur Kommunikation zwischen dem jeweiligen Sensorknoten und dem Gateway vorgesehen.

Für eine zur Synchronisation eines internen Arbeitstakts der Sensorknoten mit der Taktrate der vom Gateway gesendeten Superframes ist ein periodische Aussenden von Beacons durch das Gateway zu Beginn eines jeden Superframes vorgesehen.

Um die hohen Anforderungen an die Kürze der Latenzzeit zu optimieren, wird ein Austausch möglichst vieler Konfigurationsinformationen weitgehend vermieden. Diese Sparsamkeit im Datenaustausch wird weiterhin durch die Vorsehung eines Produktionsmodus, auch »Production Mode« oder »online Mode« genannt, unterstützt, welcher alternativ zu nicht-produktiven Modi, z.B. einem Konfigurationsmodus (Configuration Mode) oder einem Feststellungsgsmodus (Discovery Mode), betrieben werden kann. Während innerhalb eines Konfigurationsmodus ein Austausch von Konfigurationsinformationen vorgesehen ist, wird ein solcher Austausch im Produktionsmodus möglichst gering gehalten. Stattdessen werden in einem laufenden Produktionsmodus die Konfigurationsinformationen weitgehend in den Sensorknoten gespeichert.

Eine Optimierung im oben beschriebenen Sinn geht indes auf Kosten der Flexibilität des Sensornetzes. Beispielsweise können aus Fertigungsnotwendigkeiten neu hinzutretende Sensorknoten im Produktionsmodus derzeit nicht am Gateway angemeldet werden, ohne den Produktionsmodus zu verlassen und in den Konfigurationsmodus einzutreten, was mit dem hohen Nachteil einer unweigerlich während des Konfigurationsmodus notwendigen Unterbrechung der Fertigung verbunden ist.

Die Druckschrift US 2009/0238160 A1 offenbart ein Verfahren zur Kommunikation in einem Netzwerk umfassend einen Koordinaten-Knoten und eine Mehrzahl von Blatt-Knoten. Dabei wird von dem Koordinaten-Knoten periodisch ein Beacon übertragen, welches ein Superframe definiert. Das Beacon zeigt unter anderem die Länge des Superframe-Intervalls an.

Aufgabe der Erfindung ist es, Mittel anzugeben, mit denen eine Änderungen in der Konfiguration, insbesondere der Hinzutritt weiterer Sensorknoten, auf einfachere Weise als im Stand der Technik bislang bekannt ist, unterstützt wird.

Diese Aufgabe wird durch ein Beacon mit den Merkmalen des Anspruchs 1, durch einen Superframe mit den Merkmalen des Anspruchs 5 sowie durch ein Verfahren mit den Merkmalen des Anspruchs 7 gelöst.

Die Erfindung sieht ein Beacon für ein Sternnetz mit mindestens einem Gateway und mindestens einem Sensorknoten vor, wobei das Beacon neben einem Feld zur Kennzeichnung eines Produktionsmodus oder Konfigurationsmodus oder Feststellungsmodus ein Feld aufweist, welches im Produktionsmodus eine Information über eine Anzahl von Basiszeitschlitzen in einem Superframe beinhaltet.
Ein Basiszeitschlitz entspricht einer Grundeinheit für die Länge eines Zeitschlitzes, wobei bei Bedarf mehrere Basiszeitschlitze zu einem zusammengesetzten Zeitschlitz verbindbar sind. Im Folgenden wird der Begriff Zeitschlitz synonym für einen Basiszeitschlitz verwendet.
Die Erfindung ist zunächst von der Prämisse getragen, für Änderungen in der Konfiguration, insbesondere dem Hinzutritt weiterer Sensorknoten, den Produktionsmodus nicht verlassen zu müssen. Stattdessen soll ein Beacon angegeben werden, mit dem der Hinzutritt eines weiteren Sensorknotens durch einen Hinzutritt eines diesem hinzutretenden Sensorknotens zugeordneten Zeitschlitzes ermöglicht wird, ohne hierfür in einen Konfigurationsmodus wechseln zu müssen.

Die erfindungsgemäße Lösung sieht hierzu ein Beacon in einem Superframe vor, welches ein Feld aufweist, in welchem eine Information über die Anzahl von Basiszeitschlitzen im Superframe gespeichert ist. Damit unterstützt die Erfindung eine stete Mitteilung an die Sensorknoten am Anfang jedes Superframes, wie viele Zeitschlitze im Superframe enthalten sind und damit wie viele dem jeweiligen Sternnetz zugeordnete Sensorknoten an der Kommunikation beteiligt sein können.
Ändert sich der Wert im erfindungsgemäßen Feld, in welchem die Information über die Anzahl von Basiszeitschlitzen im folgenden Superframe vermerkt ist, kann dies für einen kommunizierenden Sensorknoten ein Hinweis sein, dass ein neuer Sensorknoten zum Sternnetz hinzugetreten ist.

Der mit diesem Beacon beginnende Superframe, bzw. - je nach Definition des Superframes-Anfangs - der diesem Beacon folgende Superframe enthält dann die angezeigte Anzahl an Basiszeitschlitzen. Mit Hilfe der erfindungsgemäßen Information über die Anzahl von Basiszeitschlitzen im Superframe ist es den Netzknoten ohne rechnerische Umwege möglich, diese Information direkt aus dem Beacon zu beziehen und sich entsprechend rasch an die geänderte Konfiguration in der Netzstruktur anzupassen.

Insbesondere kann die Konfigurationsänderung im Produktionsmodus erfolgen, was den fertigungstechnisch erheblichen Vorteil mit sich bringt, dass die Fertigung nicht wegen eines ansonsten notwendigen Eintritts in einen Konfigurationsmodus gestoppt werden muss.

Das erfindungsgemäße Verfahren zum Betrieb des Sensorknotens sieht folgende Schritte vor:
- Empfang des erfindungsgemäßen Beacons durch den Sensorkonten,
- Vergleichen des empfangenen Werts für die Anzahl von Basiszeitschlitzen in einem Superframe mit dem im Sensorknoten vorgehaltenen entsprechenden Wert,
- falls im Sensorknoten eine Übereinstimmung des empfangenen Werts mit dem vorgehaltenen Wert festgestellt wird, wird weiterhin der im jeweiligen Sensorknoten (SN1,SN2,N3) vorgehaltene Wert verwendet,
- falls im Sensorknoten keine Übereinstimmung festgestellt wird, wird der vorgehaltene Wert mit dem empfangenen Wert für die Anzahl von Basiszeitschlitzen in einem Superframe überschrieben.

Weitere Ausgestaltungen der Erfindung sind Gegenstand der Unteransprüche.

Ein Ausführungsbeispiel mit weiteren Vorteilen und Ausgestaltungen der Erfindung wird im Folgenden anhand der Zeichnung näher erläutert.

Dabei zeigen:
- Fig. 1: ein sternförmiges Netz,
- Fig. 2: eine aus dem Stand der Technik bekannte Beacon-Struktur,
- Fig. 3: eine erfindungsgemäße Beacon-Struktur innerhalb eines Produktionsmodus,
- Fig. 4: eine erfindungsgemäße Beacon-Struktur innerhalb eines Konfigurationsmodus mit einer Darstellung beispielhafter Werte,
- Fig. 5: eine erfindungsgemäße Beacon-Struktur innerhalb eines Produktionsmodus mit einer Darstellung beispielhafter Werte,
- Fig. 6: ein zeitliches Ablaufdiagramm zur Darstellung einer Mehrzahl von Superframes unter Verwendung eines erfindungsgemäßen Beacons.

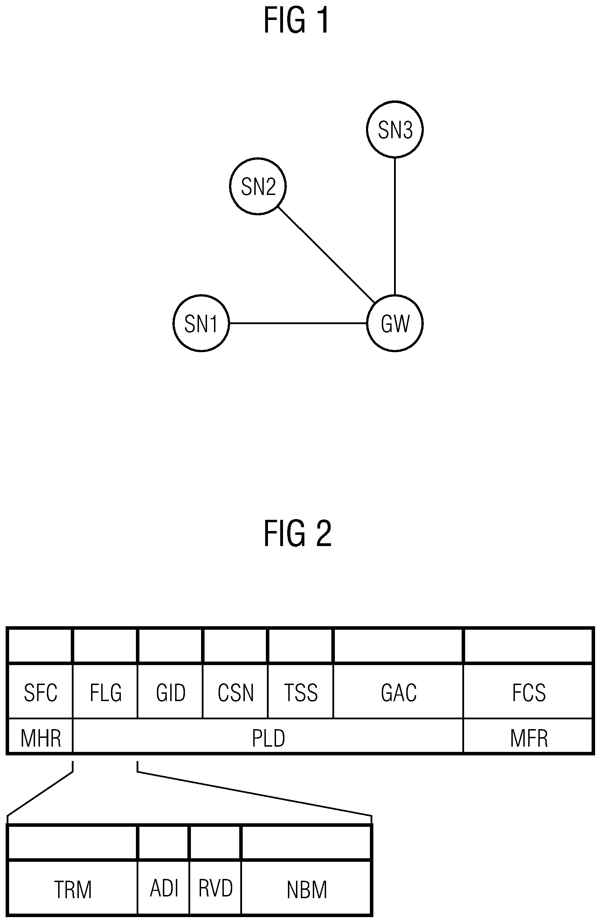

Figur 1 zeigt eine vereinfachte Darstellung eines drahtlosen Kommunikationsnetzes für die Fertigungsautomatisierung, bestehend aus eine Gateway GW und mit dem Gateway GW jeweils sternförmig verbundene Sensorknoten SN1, SN2, SN3. Die jeweiligen Sensorknoten SN1, SN2, SN3 sind beispielsweise batteriebetrieben und verfügen über eine Luftschnittstelle. Die Luftschnittstellenverbindung der Sensorknoten SN1, SN2, SN3 zum Gateway GW ist in der Zeichnung durch eine durchgezogene Linie dargestellt.

Im oberen Teil der Figur 2 ist eine bekannte Beacon-Struktur gemäß der Druckschrift [1] dargestellt. Das Beacon besteht aus einem Nachrichtenkopfeintrag MHR (»Message Header«), einem Nutzdatenteil PLD (»Payload«) sowie einem Nachrichtenendeintrag MFR (»Message Footer«).

Der Nachrichtenkopfeintrag MHR umfasst als einziges Feld ein verkürztes Rahmenkontrollfeld SFC (»Shortened Frame Control«). Dieses verkürzte Rahmenkontrollfeld umfasst einen auf ein Byte bzw. ein Oktett verkürzten MAC-Header.

Der Nutzdatenteil PLD des Beacons umfasst in der nachfolgenden Reihenfolge, in der Zeichnung von links nach rechts eingetragen, folgende Felder:
Ein Kennzeichenfeld FLG (»Flags«) zur Aufnahme von Steuerinformationen des Beacons, nämlich der Art des Modus in der Form von Produktionsmodus (Online Mode), Konfigurationsmodus (Configuration Mode) oder Feststellungsmodus (Discovery Mode). Das Kennzeichenfeld FLG weist eine Länge von einem Oktett auf.
Ein Gateway-Identifikationsfeld GID (»Gateway ID«) zur Identifikation eines zum jeweiligen Sensorknoten SN1, SN2, SN3 zugehörigen Gateways GW. Das Gateway-Identifikationsfeld GID weist eine Länge von einem Oktett auf.
Ein Konfigurationssequenzfeld CSN (»Configuration Sequence Number«) zur Angabe von 256 eindeutig unterscheidbaren Konfigurationen. Das Konfigurationssequenzfeld CSN weist eine Länge von einem Oktett auf.
Ein Zeitschlitzgrößenfeld TSS (»Timeslot Size«) zur Angabe einer Größe eines Basiszeitschlitzes in Vielfachen von Oktetten. Das Zeitschlitzgrößenfeld TSS weist eine Länge von einem Oktett auf.
Ein Gruppenbestätigungsfeld GAC (»Group Acknowledgement«) zur Rückmeldung über einen erfolgreichen Empfang von Daten, welche von den Sensorknoten SN1, SN2, SN3 bezogen werden. Das Gruppenbestätigungsfeld GAC hat eine variable Länge und wird lediglich im Produktionsmodus verwendet, während es z.B. im Konfigurationsmodus eine Länge von Null hat, d.h. im Beacon nicht vorhanden ist.

Der Nachrichtenendeintrag MFR des Beacons gemäß Figur 1 enthält als einziges Feld ein Rahmensteuerungsfeld FCS (»Frame Control Sequence«), dessen Inhalt einer Erkennung von Bitübertragungsfehlern dient.

Im unteren Teil der Figur 2 ist eine Detailansicht des Kennzeichenfeldes FLG dargestellt. Das Kennzeichenfeld FLG umfasst eine Länge von einem Oktett und beinhaltet folgende Flags:
Ein Übertragungsmoduskennzeichen TRM zur Kennzeichnung des Übertragungsmodus (»Transmission Mode«), wobei das Übertragungsmoduskennzeichen TRM eine Länge von 3 Bits aufweist.
Ein darauf folgendes Aktorenkommunikationsrichtungskennzeichen ADI (»Actuator Direction«) zur Kennzeichnung der Aktorenkommunikationsrichtung. Das Aktorenkommunikationsrichtungskennzeichen ADI weist eine Länge von 1 Bit auf.
Ein reserviertes Kennzeichen RVD mit einer Länge von 1 Bit.
Ein Kennzeichen NBM zur Angabe einer Anzahl von Basiszeitschlitzen für einen Managementzeitschlitz (»Number of Base Timeslots per Management Timeslot«). Das Kennzeichen NBM gibt die Anzahl der Basiszeitschlitze für einen Management-Zeitschlitz an, wobei der Wertebereich des Flags NBM von 0 (keine Management-Zeitschlitze vorhanden) bis 7 (maximale Länge der Management-Zeitschlitze) reicht. Das Kennzeichen NBM weist zu diesem Zweck eine Länge von 3 Bit auf.

Das Dokument [1] beschreibt eine Datenkommunikation in einem Produktionsmodus unter Anwendung der in Figur 2 gezeigten Beaconstruktur. Das Beacon liefert eine Spezifikation über zwei zeitlich nach dem Beacon folgende Managementzeitschlitze. Die Managementzeitschlitze sind definiert durch die Länge eines Basiszeitschlitzes, wie im Zeitschlitzgrößenfeld TSS angegeben, multipliziert mit einer positiven Ganzzahl im Bereich zwischen null und sieben. Die letztgenannte positive Ganzzahl wird im Kennzeichen NBM angegeben. Unter Anwendung der impliziten Kenntnis, dass exakt ein Managementzeitschlitz für eine jeweilige Übertragungsrichtung (Uplink / Downlink) zwischen dem jeweiligen Sensorknoten SN1, SN2, SN3 und dem Gateway GW verwendet wird, können die Managementzeitschlitze zur Datenkommunikation für neu hinzutretende Sensorknoten SN1, SN2, SN3 verwendet werden, die noch nicht durch das Gateway GW konfiguriert wurden.

Mit Ausnahme der Länge eines Basiszeitschlitzes, wie im Zeitschlitzgrößenfeld TSS angegeben, ist keine weitere explizite Information über die Struktur des gesamten Superframes im Beacon enthalten. Alle weiteren Informationen zur Struktur des Superframes, insbesondere die Anzahl der im Superframe enthaltenen Zeitschlitze, wird vom Gateway GW während des Konfigurationsmodus an die verbundenen Sensorknoten SN1, SN2, SN3 übermittelt und ist von diesem Zeitpunkt an gebunden an eine Konfiguration, die durch die Konfigurationssequenznummer CSN identifiziert wird.

Ein solches Vorgehen ist also zum Einen rechenaufwändig, unflexibel hinsichtlich des Vorgehens bei einem notwendig gewordenen Hinzutritt weiterer Sensorknoten und auch, wie unten näher erläutert, hinsichtlich eines energieeffizienten Betriebs der Sensorknoten im Zusammenhang mit einem Schlafmodus nur suboptimal.

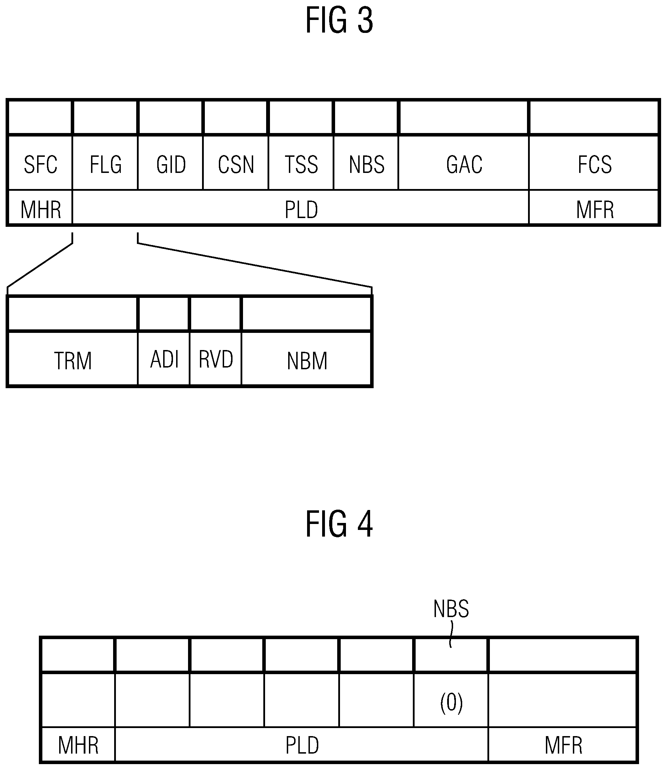

In Figur 3 ist eine erfindungsgemäße Beacon-Struktur dargestellt. Die erfindungsgemäße Beacon-Struktur unterscheidet sich von der aus Figur 1 bekannten Beacon-Struktur dadurch, dass innerhalb des Nutzdatenteils PLD ein weiteres Feld NBS (»Number of Base Timeslots in Superframe«) hinzutritt. In einer bevorzugten Ausführungsform der Erfindung ist das Feld NBS zur Angabe der Anzahl der Basiszeitschlitze pro Superframe zwischen dem Zeitschlitzgrößenfeld TSS und dem Gruppenbestätigungsfeld GAC angeordnet und weist eine Länge von 1 Oktett auf. Die Anordnung und die Länge des Felds NBS ist jedoch auch auf andere Weise zu gestalten.

Die Beacon-Struktur weist gemäß einer vorteilhaften Ausführung der Erfindung einen im wesentlich gleichen Aufbau in verschiedenen Moden, also insbesondere Produktionsmodus, Konfigurationsmodus und Feststellungsmodus, auf. Abhängig von einem jeweiligen Modus können bestimmte Felder, z.B. das für eine variable Länge vorgesehene Gruppenbestätigungsfeld GAC jedoch eine Länge von 0 aufweisen, d.h. in der Beacon-Struktur entfallen.

Im erfindungsgemäß neu zum Beacon hinzugetretenen Feld NBS zur Angabe der Anzahl der Basiszeitschlitze pro Superframe wird die Länge des Superframes in Vielfachen der Länge eines Basiszeitschlitzes angegeben.

Gemäß der Erfindung sind drei Ausführungsformen vorgesehen, an welcher Stelle eine Zählung der Anzahl von Basiszeitschlitzen innerhalb des Superframes beginnt:

Gemäß einer ersten Ausführungsform ist vorgesehen, die Zählung am Beginn eines Superframes zu starten. Dies bedeutet, dass das erfindungsgemäße Feld NBS die notwendigen Basiszeitschlitze für das Beacon sowie die Managementzeitschlitze umfasst.

Gemäß einer zweiten Ausführungsform wird mit der Zählung nach dem Beacon begonnen. Dies bedeutet, dass der Wert im erfindungsgemäßen Feld NBS die Anzahl der Basiszeitschlitze, welche für die Managementzeitschlitze vorbehalten sind, enthält. Andererseits enthält die Zählung gemäß dieser zweiten Ausführungsform nicht die für das Beacon notwendigen Basiszeitschlitze.

Gemäß einer bevorzugten dritten Ausführungsform ist vorgesehen, die Zählung nach den Managementzeitschlitzen zu beginnen. Dies bedeutet, dass der Wert für die Anzahl der Basiszeitschlitze in einem Superframe im erfindungsgemäßen Feld NBS lediglich die Anzahl der Basiszeitschlitze, welche für eine Kommunikation der Sensoren im Produktionsmodus zur Verfügung steht, berücksichtigt.

Die dritte Ausführungsform gemäß obiger Darstellung wird bevorzugt, da sie den längsten Superframe gestattet. Mit anderen Worten gestattet diese Zählweise auch die größtmögliche Anzahl an Sensorknoten im Sternnetz.

Wie oben erwähnt, weist die Beacon-Struktur gemäß einer vorteilhaften Ausführung der Erfindung einen im wesentlich gleichen Aufbau in verschiedenen Moden auf. Dies bezieht sich speziell auf die Felder:
- Feld NBM im Kennzeichenfeld FLG zur Angabe der Anzahl der Basiszeitschlitze für einen Managementzeitschlitz,
- Gateway-Identifikationsfeld GID,
- Konfigurationssequenzfeld CSN, und
- Zeitschlitzgrößenfeld TSS.

Die Werte dieser vier Felder sind wichtig, um im Rahmen des Erkennungs- und/oder des Konfigurationsmodus explizite Informationen über die Länge eines Managementzeitschlitzes an einen neu hinzutretenden Sensorknoten zu übermitteln.

Die folgenden Felder
- Feld NBS zur Angabe der Anzahl der Basiszeitschlitze pro Superframe, und
- Gruppenbestätigungsfeld GAC
können dagegen gemäß einer alternativen Ausführungsvariante der Erfindung im Feststellungs- und/oder Konfigurationsmodus entfallen. Falls die oben genannten Felder im Beacon enthalten sind, gestatten sie zusätzliche Funktionalitäten seitens der Sensorknoten SN1, SN2, SN3.

Das Aktorenkommunikationsrichtungskennzeichen ADI wird üblicher Weise nur während des Produktionsmodus verwendet und kann innerhalb des Feststellungs- und des Konfigurationsmodus ignoriert werden.

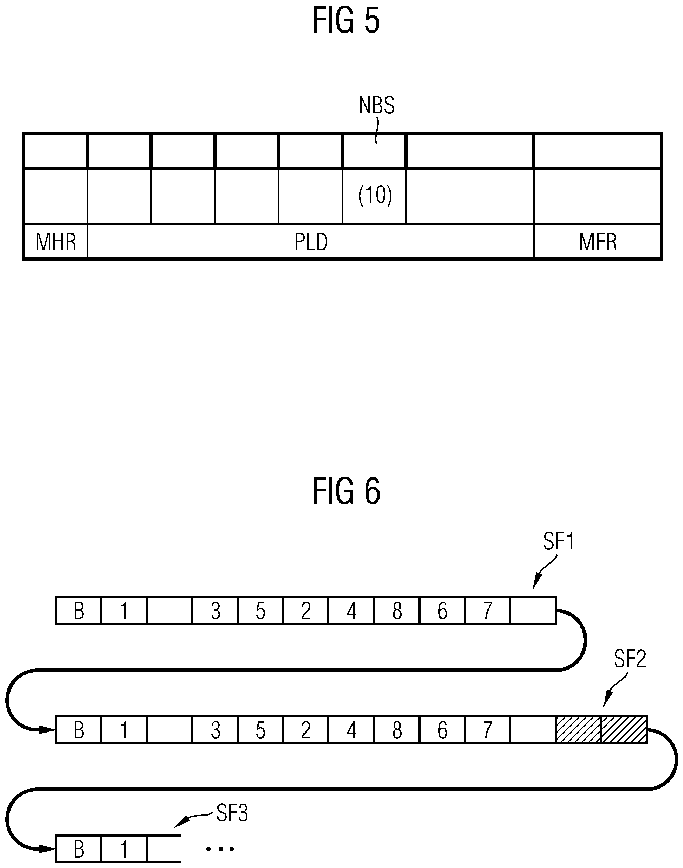

Unter Anwendung der erfinderischen Mittel kann das Gateway bestimmte Konfigurationen im Produktionsmodus ändern. Dies bedeutet, dass ein bislang notwendiges und nachteiliges Wechseln in den Konfigurationsmodus entfällt. Unter Anwendung der erfinderischen Mittel dagegen kann das Sternnetz ohne Unterbrechung im Produktionsmodus verbleiben. Ein Beispiel für die Änderung der Konfiguration ist der Hinzutritt weiterer Zeitschlitze am Endes eines Superframes, siehe auch Fig. 6. Dabei sind mit den Mitteln der Erfindung beliebige Änderungen in der Länge des Superframes möglich, so lange keine existierenden Zuordnungen zwischen Sensorknoten SN1, SN2, SN3 und diesen jeweils zugehörigen Zeitschlitzen betroffen sind.

Ein weiterer wesentlicher Vorteil der Erfindung besteht in der verbesserten Unterstützung einer energieeffizienten Arbeitsweise der Sensorknoten SN1, SN2, SN3. Eine solche energieeffiziente Arbeitsweise der Sensorknoten SN1, SN2, SN3 wird durch ein bereits bekanntes Abschalten der Funkschnittstelle - Schlafmodus - für eine längere Zeit erreicht.

Der Schlafmodus wird gewöhnlich für einen vorgesehenen Empfang eines Beacons unterbrochen. Ein Empfang von Beacons dient nämlich einer notwendigen Synchronisation der Sensorknoten SN1, SN2, SN3 sowie einem Bezug von Daten über den aktuellen Netzstatus. Mit dem erfindungsgemäßen Feld NBS zur Angabe der Anzahl der Basiszeitschlitze pro Superframe erhält ein Sensorknoten SN1, SN2, SN3 akkuratere Informationen über den Zeitpunkt, zu dem ein nächstes Beacon eintrifft, sogar dann, wenn sich die Länge eines Superframes gerade ändert. Die erfindungsgemäße Maßnahme erlaubt also eine verbesserte Nutzung des energiesparenden Schlafmodus.

Ein Vorteil der durch die Identität der Beacon-Struktur auch im Feststellungs- und Konfigurationsmodus erreicht wird, besteht darin, dass ein dieses Beacon empfangender Sensorknoten in der Lage ist, mit dem Gateway GW in einer protokollgemäßen Weise zu kommunizieren, selbst wenn dieser Sensorknoten noch nicht konfiguriert oder in das Netz aufgenommen wurde.

In den folgenden Figuren 4 und 5 stellen in Klammer gesetzte Zahlen keine Bezugszeichen dar, sondern einen dem jeweiligen Feld innewohnenden Wert.

Figur 4 zeigt eine erfindungsgemäße Beacon-Struktur während eines Konfigurationsmodus. In Figur 4 weist das Feld NBS zur Angabe der Anzahl der Basiszeitschlitze in einem Superframe einen Wert von 0 auf, wie in der Zeichnung durch eine in Klammer gesetzte 0 dargestellt ist. Das Gruppenbestätigungsfeld GAC weist im Konfigurationsmodus eine Länge von 0 auf und ist daher zeichnerisch nicht dargestellt.

In Figur 5 ist eine erfindungsgemäße Beacon-Struktur im Produktionsmodus dargestellt. Das Gruppenbestätigungsfeld GAC hat im Produktionsmodus eine variable Länge, der Inhalt des Gruppenbestätigungsfeldes GAC ist für die weitere Erläuterung jedoch ohne Belang. In einer gemäß Figur 3 dargestellten Beacon-Struktur ist das Feld NBS zur Angabe der Anzahl der Basiszeitschlitze in einem Superframe links vom Gruppenbestätigungsfeld GAC angeordnet und weist einen Wert von 10 auf, wie zeichnerisch durch eine in Klammer gesetzte Ziffer 10 dargestellt.

Im Folgenden wird in Abweichung zur Anzahl der Sensorknoten SN1, SN2, SN3 in Figur 1 ein Sternnetz mit acht Sensorknoten angenommen. Ein zugehöriger Superframe umfasst ein Beacon sowie zwei Managementzeitschlitze. Die Managementzeitschlitze umfassen eine Länge von sechs Basiszeitschlitzen. Weiterhin umfasst der Superframe zehn Basiszeitschlitze zur Kommunikation mit den Sensorknoten.

Gemäß der dritten Ausführungsform zur Zählung der Anzahl von Basiszeitschlitzen innerhalb eines Superframes (siehe oben) wird mit dieser Zählung nach den Managementzeitschlitzen begonnen. Das Übertragungsmoduskennzeichen TRM weist aufgrund des bestehenden Produktionsmodus einen binären Wert von 000 auf.

Innerhalb des Feststellungsmodus würde dieser binäre Wert 100 und innerhalb des Konfigurationsmodus würde dieser Wert 110 betragen.

In Figur 6 ist ein zeitliches Ablaufdiagramm einer Übertragung von Superframes SF1, SF2, SF3 dargestellt. In der Zeichnung an oberster Stelle der Figur 6 ist ein erster Superframe SF1 dargestellt, auf welchen zeitlich ein zweiter Superframe SF2 folgt. An den zweiten Superframe SF2 schließt ein dritter Superframe SF3 an, welcher in der Zeichnung lediglich ausschnittsweise dargestellt ist. Im zeitlichen Ablaufdiagramm ist also ein Fortschreiten der Zeit von oben nach unten sowie von links nach rechts angenommen.

Der erste Superframe SF1 besteht aus einem Beacon B, an das sich eine Anzahl von 10 rechteckig dargestellten Basiszeitschlitzen anschließt. Die rechteckig dargestellten Basiszeitschlitze weisen teilweise eine Kennzeichnung auf, welche entsprechende Sensorknoten SN1, SN2, SN3 bezeichnen. Beispielsweise ist an das Beacon B ein erster Zeitschlitz 1 angrenzend vorgesehen, welcher einer Übermittlung von Daten von und zum Sensorknoten SN1 dient.

Im erfindungsgemäßen Beacon B wird entsprechend der Anzahl an Basiszeitschlitzen, nämlich 10, im Feld NBS ein Wert von 10 eingetragen. Im zweiten Superframe SF2 ändert sich nun die Anzahl der Basiszeitschlitze auf einen Wert 12 durch einen Hinzutritt von zwei in der Zeichnung schraffiert dargestellten Basiszeitschlitzen. Entsprechend ist im Feld NBS des Beacons B für den zweiten Superframe SF2 ein Wert von 12 eingetragen.

## Patentansprüche

1. Beacon in einem Superframe für ein Sternnetz mit mindestens einem Gateway (GW) und mindestens einem Sensorknoten (SN1, SN2, SN3), wobei das Beacon ein Kennzeichenfeld (FLG) zur Aufnahme von Steuerinformationen des Beacons zur Kennzeichnung eines Produktionsmodus oder Konfigurationsmodus oder Feststellungsmodus des Gateways (GW) aufweist, **dadurch gekennzeichnet, dass** das Beacon ferner ein Feld (NBS) aufweist, welches im Produktionsmodus eine Information über die Anzahl von Basiszeitschlitzen in dem Superframe beinhaltet.

2. Beacon gemäß Anspruch 1, wobei das Beacon weitere Felder aufweist, welche beinhalten
- ein Gateway-Identifikationsfeld (GID) zur Identifikation eines zum jeweiligen Sensorknoten (SN1, SN2, SN3) zugehörigen Gateways (GW), und/oder,
- ein Konfigurationssequenzfeld (CSN) zur Identifikation von unterschiedlichen Konfigurationen, und/oder,
- ein Zeitschlitzgrößenfeld (TSS) zur Angabe einer Größe eines Basiszeitschlitzes.

3. Beacon gemäß einem der vorgenannten Ansprüche, wobei das Beacon weiterhin ein Gruppenbestätigungsfeld (GAC) zur Rückmeldung über einen erfolgreichen Empfang von Daten enthält.

4. Beacon gemäß einem der vorgenannten Ansprüche, wobei die Zählung der Anzahl von Basiszeitschlitzen in einem Superframe nach den Managementzeitschlitzen des Superframes beginnt.

5. Superframe für ein Sternnetz, wobei der Superframe ein Beacon gemäß einem der Ansprüche 1 bis 4 umfasst.

6. Superframe gemäß Anspruch 5, **dadurch gekennzeichnet, dass** für jede Übertragungsrichtung ein Management-Zeitschlitz zur Verfügung steht und die Management-Zeitschlitze direkt nach dem Beacon angeordnet sind.

7. Verfahren zum Betrieb eines Sternnetzes, mit einem Gateway (GW) und mehreren Sensorknoten (SN1, SN2, SN3), umfassend folgende Schritte:
- Empfang eines Beacons in einem Superframe durch einen Sensorkonten (SN1, SN2, SN3), wobei das Beacon ein Kennzeichenfeld (FLG) zur Aufnahme von Steuerinformationen des Beacons zur Kennzeichnung eines Produktionsmodus oder Konfigurationsmodus oder Feststellungsmodus des Gateways (GW) sowie ein Feld aufweist, welches im Produktionsmodus eine Information über die Anzahl von Basiszeitschlitzen in dem Superframe beinhaltet,
- Überschreiben eines im Sensorknoten (SN1, SN2, SN3) vorgehaltenen Werts für die Anzahl von Basiszeitschlitzen in einem Superframe mit dem empfangenen Wert für die Anzahl von Basiszeitschlitzen in dem Superframe.

## Claims

1. Beacon in a superframe for a star network comprising at least one gateway (GW) and at least one sensor node (SN1, SN2, SN3), wherein the beacon comprises a flag field (FLG) for receiving control information for the beacon for flagging a production mode or configuration mode or discovery mode of the gateway (GW),
**characterised in that** the beacon furthermore comprises a field (NBS), which contains information about the number of base time slots in the superframe in production mode.

2. Beacon according to claim 1, wherein the beacon comprises further fields comprising
- a gateway identification field (GID) for identifying a gateway (GW) belonging to the respective sensor node (SN1, SN2, SN3) and/or,
- a configuration sequence field (CSN) for identifying different configurations and/or,
- a time slot size field (TSS) for indicating the size of a base time slot.

3. Beacon according to one of the preceding claims, wherein the beacon also comprises a group acknowledgement field (GAC) for acknowledging the successful reception of data.

4. Beacon according to one of the preceding claims, wherein the counting of the number of base time slots in a superframe starts after the management time slots of the superframe.

5. Superframe for a star network, wherein the superframe comprises a beacon according to one of claims 1 to 4.

6. Superframe according to claim 5, **characterised in that** one management time slot is available for each transmission direction and the management time slots are arranged directly after the beacon.

7. Method for operating a star network, comprising a gateway (GW) and a plurality of sensor nodes (SN1, SN2, SN3) comprising the following steps:
- the reception of a beacon in a superframe by a sensor node (SN1, SN2, SN3), wherein the beacon comprises a flag field (FLG) for receiving control information for the beacon for flagging a production mode or configuration mode or discovery mode of the gateway (GW) and also comprises a field containing information about the number of base time slots in the superframe in production mode,
- overwriting a value held in the sensor node (SN1, SN2, SN3) for the number of base time slots in a superframe with the received value for the number of base time slots in the superframe.

## Revendications

1. Balise dans une supertrame pour un réseau en étoile avec au moins une passerelle (GW) et au moins un noeud capteur (SN1, SN2, SN3), la balise comportant un champ de signes (FLG) pour recevoir des informations de commande de la balise pour marquer un mode de production ou un mode de configuration ou un mode de constatation de la passerelle (GW), **caractérisée en ce que** la balise comporte en outre un champ (NBS) qui, dans le mode de production, contient une information sur le nombre de créneaux temporels de base de la supertrame.

2. Balise selon la revendication 1, la balise comportant d'autres champs qui contiennent :
- un champ d'identification de passerelle (GID) pour identifier une passerelle (GW) associée au noeud capteur respectif (SN1, SN2, SN3) et/ou
- un champ de séquence de configuration (CSN) pour identifier différentes configurations et/ou
- un champ de taille de créneau temporel (TSS) pour indiquer une taille d'un créneau temporel de base.

3. Balise selon l'une des revendications précédentes, la balise contenant en outre un champ de confirmation de groupe (GAC) pour répondre à une réception réussie de données.

4. Balise selon l'une des revendications précédentes, le comptage du nombre de créneaux temporels de base commençant dans une supertrame après les créneaux temporels de gestion de la supertrame.

5. Supertrame pour un réseau en étoile, la supertrame comprenant une balise selon l'une des revendications 1 à 4.

6. Supertrame selon la revendication 5, **caractérisée en ce qu'**un créneau temporel de gestion est disponible pour chaque direction de transmission et **en ce que** les créneaux temporels de gestion viennent directement après la balise.

7. Procédé d'exploitation d'un réseau en étoile comportant une passerelle (GW) et plusieurs noeuds capteurs (SN1, SN2, SN3), comprenant les étapes suivantes :
- réception d'une balise dans une supertrame par un noeud capteur (SN1, SN2, SN3), la balise comportant un champ de signes (FLG) pour la réception d'informations de commande de la balise pour le marquage d'un mode de production ou d'un mode de configuration ou d'un mode de constatation de la passerelle (GW) ainsi qu'un champ qui, dans le mode de production, contient une information sur le nombre de créneaux temporels de base de la supertrame,
- écrasement d'une valeur tenue à disposition dans le noeud capteur (SN1, SN2, SN3) pour le nombre de créneaux temporels de base d'une supertrame par la valeur reçue pour le nombre de créneaux temporels de base de la supertrame.
